# FASCICULE DE BREVET EUROPEEN

(11) **EP 0 940 296 B1**
(45) Date de publication et mention de la délivrance du brevet: **16.07.2003**
(21) Numéro de dépôt: 99104271.4
(22) Date de dépôt: 03.03.1999
(51) Int. Cl.: B60R 16/02

(54) **Tableau de commande à circuit imprimé, en particulier pour véhicule automobile**
Fahrzeugsteuerpult mit gedruckter Schaltung
Vehicle control panel with printed circuit

(30) Priorité: 04.03.1998 FR 9802631
(43) Date de publication de la demande: 08.09.1999
(73) Titulaire: Valeo Electronique, 94042 Créteil (FR)
(72) Inventeur: Lacroix, Louis, 92370 Chaville (FR); Toussaint, Alain, 78760 Pontchartrain (FR)
(74) Mandataire: Lemaire, Marc

(56) Documents cités:
- EP-A- 0 478 218
- DE-A- 3 113 509
- DE-A- 3 903 229
- DE-A- 4 334 355

## Description

L'invention concerne un tableau de commande du type à circuit imprimé destiné tout particulièrement à un véhicule automobile.

On connaît déjà des tableaux de commande de ce type qui comprennent un bâti muni d'une façade, un circuit imprimé porté par le bâti et un dispositif d'affichage relié au circuit imprimé et placé derrière une fenêtre de la façade.

Le document DE-A-4334355 divulgue le preambule selon la revendication 1.

Un tel tableau peut être utilisé, par exemple, pour la commande d'une installation de chauffage et/ou de climatisation de l'habitacle d'un véhicule automobile.

La façade du tableau de commande est habituellement intégrée, dans une position sensiblement verticale, dans la planche de bord ou la console du véhicule automobile en sorte que le dispositif d'affichage puisse être visible du conducteur. La façade loge habituellement un clavier composé d'une pluralité d'organes, du type touche, bouton ou analogue, susceptibles d'être actionnés par le conducteur du véhicule automobile. La façade loge généralement des moyens d'éclairage servant à éclairer le clavier et différents symboles ou pictogrammes, notamment pour la conduite de nuit. En outre la façade loge habituellement des témoins de fonction éclairants, tels que des diodes électroluminescentes, qui sont allumés en position de fonctionnement.

On connaît déjà des tableaux de commande du type précité, dans lesquels le circuit imprimé comporte une seule carte disposée parallèlement à la façade. Cette solution a pour inconvénient de laisser une place trop petite pour implanter l'électronique et les pistes associées au circuit imprimé.

En outre, on connaît des tableaux de commande du type précité, dans lesquels le circuit imprimé comporte deux cartes disposées perpendiculairement entre elles, et pouvant être soit séparées soit au contact l'une de l'autre.

Cette dernière solution nécessite des moyens particuliers pour la fixation du dispositif d'affichage derrière la façade du tableau de commande. Ces moyens peuvent consister, par exemple, en une connexion souple entre le dispositif d'affichage et l'une des cartes du circuit imprimé, ce qui nécessite alors de prévoir une connexion entre les deux cartes.

Ces moyens peuvent consister aussi en un joint ou en des pattes prenant appui sur le dispositif d'affichage, ce qui nécessite alors une nappe souple de fils de connexion entre le dispositif d'affichage lui-même et l'une des cartes du circuit imprimé.

Toutes ces solutions sont coûteuses et ne permettent pas de garantir toujours un maintien correct du dispositif d'affichage en appui derrière la façade, d'où il résulte des vibrations et un jeu apparent sur le pourtour du dispositif d'affichage.

L'invention a notamment pour but de surmonter les inconvénients précités.

C'est en particulier un but de l'invention de procurer un tableau de commande du type défini en introduction qui permet de maintenir parfaitement le dispositif d'affichage en appui contre la façade, et cela quelles que soient les tolérances de fabrication.

L'invention propose à cet effet un tableau de commande du type défini en introduction, dans lequel le circuit imprimé comprend une première carte dite "carte façade" (ou "carte clavier") placée derrière la façade et munie d'une ouverture, ainsi qu'une deuxième carte dite "carte calculateur" disposée de manière à former un angle donné par rapport à la carte façade et comportant un prolongement propre à passer par l'ouverture de la carte façade ; dans lequel le prolongement porte le dispositif d'affichage ; et dans lequel des moyens de maintien sont interposés entre la carte calculateur et le bâti pour maintenir le dispositif d'affichage dans une position définie par rapport à la façade.

Ainsi, le tableau de commande de l'invention comprend deux cartes disposées angulairement entre elles et s'interpénétrant mutuellement grâce au prolongement de la carte calculateur qui passe par l'ouverture de la carte façade, lequel prolongement porte le dispositif d'affichage.

Grâce aux moyens de maintien, la position de la carte calculateur peut être ajustée aisément de sorte que le dispositif d'affichage se trouve dans une position définie par rapport à la façade, c'est-à-dire généralement en appui direct ou indirect derrière une face arrière de la façade.

Il en résulte que le dispositif d'affichage est bien plaqué à l'arrière de la façade en supprimant tout interstice, jeu ou fente éventuel, ce qui permet une meilleure étanchéité aux intrusions de poussières et un meilleur aspect. De plus, cela élimine tout risque de bruit dû à des vibrations et permet de s'affranchir des tolérances de fabrication.

Cet agencement permet de plus de réduire la connectique entre le dispositif d'affichage et la carte calculateur et d'assurer une meilleure protection aux décharges électriques, en éloignant la connectique de la façade.

Dans une forme de réalisation préférée de l'invention, la carte façade et la carte calculateur sont disposées perpendiculairement entre elles. Avantageusement, la carte façade est sensiblement parallèle à une face arrière de la façade, tandis que la carte calculateur est sensiblement perpendiculaire à ladite face arrière de la façade.

La carte façade porte avantageusement des contacts électriques propres à établir une liaison avec un clavier de commande porté par la façade et/ou avec des moyens d'éclairage de la façade.

De préférence, la carte façade est un circuit imprimé simple face portant deux nappes de connexion opposées, ou bien encore un circuit imprimé double face.

La carte calculateur est de préférence un circuit imprimé double face.

Selon une autre caractéristique de l'invention, le tableau de commande comprend des moyens d'interconnexion électriques, entre la carte façade et la carte calculateur et autorisant leur positionnement mutuel.

Ces moyens d'interconnexion sont destinés à permettre une connexion électrique quel que soit le positionnement mutuel de la carte façade et de la carte calculateur, afin de tenir compte de la position de réglage de la carte calculateur.

Dans une forme de réalisation préférée de l'invention, les moyens d'interconnexion comprennent au moins un connecteur à broches et au moins une embase à contacts propres à établir un contact électrique mutuel.

Avantageusement, ces moyens d'interconnexion comprennent au moins un connecteur porté par la carte façade et au moins une embase portée par la carte calculateur. Dans un exemple de réalisation, la carte façade et la carte calculateur portent respectivement deux connecteurs et deux embases.

En ce cas, les broches des connecteurs s'étendent avantageusement perpendiculairement à la carte façade.

Dans une autre forme de réalisation de l'invention, les moyens d'interconnexion comprennent une nappe souple de conducteurs électriques.

Les moyens de maintien peuvent être réalisés sous la forme de moyens réglables de fixation. De tels moyens réglables comprennent avantageusement au moins une vis propre à traverser un trou oblong ménagé au travers de la carte calculateur et à s'engager dans un trou du bâti.

En variante, les moyens de maintien peuvent être réalisés sous la forme de moyens faisant ressorts permanents.

Selon une autre caractéristique de l'invention, le tableau de commande comprend des moyens élastiques propres à solliciter la carte calculateur en direction de la façade et donc le dispositif d'affichage vers sa position prédéfinie.

Ces moyens élastiques peuvent être constitués par des ressorts rapportés (par exemple des lames, des ressorts, des agrafes, etc.) et peuvent éventuellement dispenser l'emploi d'une vis de maintien ou de fixation.

De préférence, ces moyens élastiques comprennent au moins une patte souple portée par le bâti, et propre à prendre appui contre un bord de la carte calculateur.

Dans une forme de réalisation de l'invention, la carte façade est directement en appui contre la façade.

Dans une autre forme de réalisation, un bloc intermédiaire est intercalé entre la façade et la carte façade. Ceci a essentiellement pour but de guider les éléments du tableau, le dispositif d'affichage et les touches d'actionnement ou de procurer des parois pour localiser la lumière ou encore de procurer une étanchéité.

Le dispositif d'affichage du tableau de commande de l'invention est avantageusement du type à cristaux liquides.

Dans la description qui suit, faite seulement à titre d'exemple, on se réfère aux dessirs annexés, sur lesquels :
- la figure 1 est une vue schématique en coupe transversale d'un tableau de commande selon l'invention ;
- la figure 2 est une vue en coupe simplifiée correspondant à la figure 1 et montrant la disposition mutuelle des deux cartes du circuit imprimé et un exemple de moyens de connexion entre ces cartes ;
- la figure 3 est une vue de face de la carte façade ;
- la figure 4 est une vue de dessus de la carte calculateur ; et
- la figure 5 est une vue en perspective éclatée d'un autre tableau de commande selon l'invention.

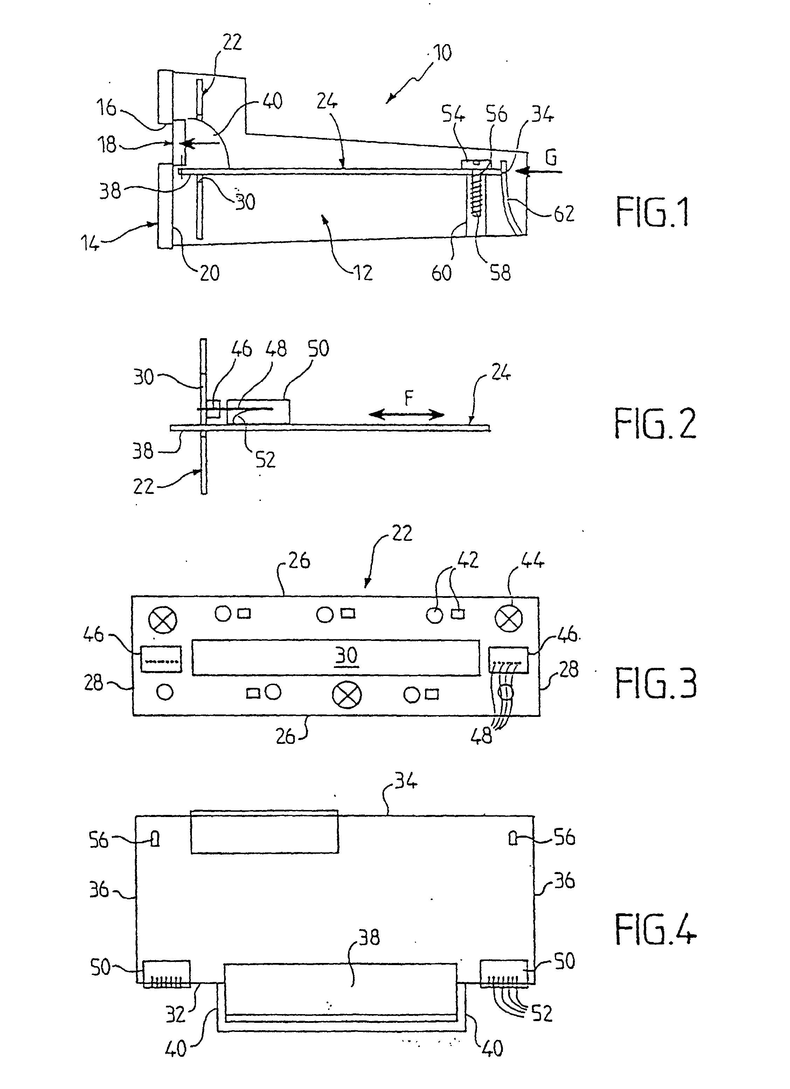

On se réfère tout d'abord à la figure 1 qui représente un tableau de commande 10 destiné, dans l'exemple, à commander une installation de chauffage et/ou de climatisation de l'habitacle d'un véhicule automobile. Le tableau de commande 10 comprend un bâti 12 réalisé sous la forme d'un boîtier moulé en matière plastique. Ce bâti comporte une façade 14 destinée à être intégrée dans une position sensiblement verticale dans la planche de bord ou la console du véhicule.

La façade 14 comporte une fenêtre 16 de forme générale rectangulaire derrière laquelle est placé un dispositif d'affichage 18 du type à cristaux liquides. Dans l'exemple, le dispositif 18 est de forme sensiblement rectangulaire et possède des dimensions supérieures à celles de la fenêtre 16 pour pouvoir venir en appui contre une face arrière 20 de la façade. En variante, ce dispositif d'affichage peut être constitué d'un hublot simple ou de plusieurs hublots, le dispositif lui-même étant formé d'un ou de plusieurs éléments.

Le bâti 12 porte un circuit imprimé comprenant une première carte 22 dite "carte façade" ou encore "carte clavier" qui est destinée à être placée derrière la façade dans une position sensiblement parallèle à la face 20 de cette dernière. Le circuit imprimé comprend en outre une deuxième carte 24 dite "carte calculateur" disposée perpendiculairement à la carte façade. Ainsi, dans la position normale d'utilisation du tableau de commande, la carte façade 22 et la carte calculateur 24 sont respectivement en position sensiblement verticale et en position sensiblement horizontale.

La carte façade, que l'on peut appeler aussi "carte clavier", sert essentiellement d'interface avec la façade (clavier de commande, éclairage) alors que la carte calculateur sert essentiellement à supporter l'électronique de commande et éventuellement de régulation du tableau, ou d'autres électroniques intégrées dans le boîtier.

La carte façade 22 (figures 1, 2 et 3) possède une forme adaptée à la fenêtre de la façade avec des dimensions inférieures à celles définies par les bords de la fenêtre. Dans l'exemple, la carte façade 22 est de forme générale rectangulaire et est délimitée par deux grands côtés 26 et deux petits côtés 28 (figure 3). Elle possède une ouverture centrale 30 de forme générale rectangulaire dont les côtés sont parallèles aux côtés 26 et 28 précités. Cette ouverture doit être suffisante pour laisser passer le dispositif d'affichage 18 porté par la carte calculateur 24.

La carte calculateur 24 (figure 4) est de forme générale rectangulaire. Elle comporte un bord antérieur 32, un bord postérieur 34 et deux bords latéraux 36. Par ailleurs, elle comporte un prolongement 38 de forme générale rectangulaire qui prolonge la carte au-delà du bord antérieur 32. Ce prolongement 38 possède une largeur inférieure à la plus grande dimension de l'ouverture 30 de la carte façade 22, de manière à pouvoir passer au travers de cette dernière. Le prolongement 38 supporte le dispositif d'affichage 18 dans une position perpendiculaire. Des flasques latéraux 40, sensiblement en forme d'arc de cercle (figures 1 et 4) servent à maintenir le dispositif d'affichage 18 dans une position perpendiculaire à la carte 24.

La carte façade 22 est, dans l'exemple, réalisé sous la forme d'un circuit imprimé simple face portant deux nappes de connexion, une de chaque côté pour le dessin des pistes. Mais cette carte façade pourrait avoir une structure différente. Cette carte comporte des contacts électriques 42 propres à établir une liaison avec des lampes ou témoins lumineux et des contacts électriques 44 propres à établir une liaison avec des organes de commande (touches, boutons ou analogues) faisant partie d'un clavier intégré dans la façade 14.

Par ailleurs, la carte façade 22 comporte deux connecteurs 46 munis d'une pluralité de broches 48 pour coopérer chacun avec une embase 50 de la carte calculateur 24. Cette dernière est un circuit imprimé du type double face relié aux deux embases 50.

Comme on peut le voir sur la figure 2, les broches 48 des connecteurs 46 s'étendent perpendiculairement à la carte façade 22 et sont propres à coopérer avec des organes de contact 52 faisant partie des embases 50, en sorte qu'une liaison électrique est établie entre les deux cartes 22 et 24 quelle que soit la position de la carte calculateur 24. En effet, cette dernière peut être réglée en position comme représenté par la double flèche F sur la figure 2 pour permettre de plaquer le dispositif d'affichage 18 contre la face 20 de la façade 14 (figure 1).

Pour assurer le maintien en position de la carte calculateur 24, on prévoit, dans l'exemple, deux vis 54, dont une seule est visible sur la figure 1, venant du dessus ou du dessous du boîtier. Chacune des vis 54 traverse un trou oblong 56 de la carte calculateur 24 (figure 4) et s'engage dans un trou 58 ménagé dans un bossage 60 du bâti 12 (figure 1).

En variante, le maintien de la carte calculateur pourrait être assuré par des moyens élastiques permanents plutôt que par des vis.

Par ailleurs, comme on peut le voir sur la figure 1, une patte souple élastique 62 portée par le bâti 12 est propre à prendre appui contre le bord 34 de la carte calculateur 24. Cette lame souple 62 sollicite élastiquement la carte 24 dans la direction de la flèche G (figure 1) ce qui contribue à maintenir le dispositif d'affichage 18 en appui contre la face arrière de la façade 14. Ainsi, de cette manière, il est possible d'ajuster la plaque 24 pour la maintenir dans une position définie en laquelle le dispositif d'affichage 18 est en appui contre la façade 14, ce qui permet d'éliminer tout jeu et donc tout bruit de vibration, et ce quelles que soient les dispersions dimensionnelles de fabrication.

Lors du montage, les pattes souples 62 permettent de repousser la carte calculateur 24 jusqu'à obtenir un contact parfait du dispositif d'affichage 18 contre la façade en évitant tout jeu. Les deux vis 54 assurent la position ainsi préréglée et bloquent définitivement l'assemblage.

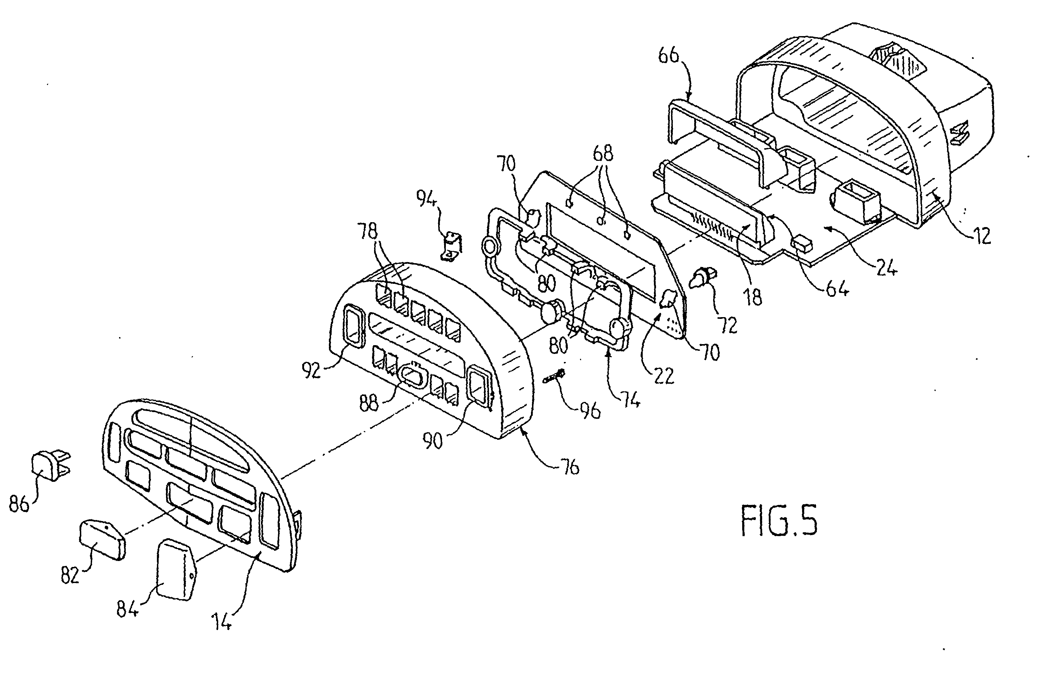

On se réfère maintenant à la figure 5 pour décrire un autre exemple de réalisation d'un tableau de commande selon l'invention. Sur cette figure, les éléments communs avec la forme de réalisation précédente sont désignés par les mêmes références numériques.

Le bâti 12 est réalisé ici sous la forme d'un capot ouvert réalisé dans une matière plastique rigide, par exemple du type ABS. Le dispositif d'affichage 18 du type à cristaux liquides est fixé sur la carte calculateur 24 et reçoit, derrière lui, un prisme 64 en verre synthétique, destiné à être recouvert lui-même par une boîte à lumière 66 réalisée avantageusement en matière plastique du type ABS.

La carte façade 22 porte trois voyants 68 tels que des diodes électroluminescentes et deux supports 70 destinés chacun à supporter une lampe 72.

La façade 14 qui est destinée à être rapportée devant l'ouverture du bâti 12 en forme de boîtier est réalisée en matière plastique peinte, par exemple du type ABS.

Entre la carte façade 22 et la façade 14 sont maintenus emprisonnés un guide de lumière 74 et un bloc intermédiaire 76. Le bloc 76 possède des ouvertures telles 78 permettant le passage de parties 80 du guide de lumière 74. En outre, ce bloc intermédiaire 76 comporte des logements pour des touches, à savoir une touche 82 du type basculeur vertical, une touche 84 du type basculeur horizontal et une touche 86.

Ces trois touches passent au travers d'ouvertures appropriées de la façade 14 et constituent des éléments d'un clavier de commande. Les touches 82, 84 et 86 sont montées sur des supports respectifs 88, 90 et 92 portés par le bloc intermédiaire 76.

Un cavalier 94 est prévu pour maintenir le support 92. En outre, un poussoir 96 est prévu pour traverser le bloc intermédiaire 76.

Bien entendu, l'invention n'est pas limitée aux formes de réalisation décrites précédemment à titre d'exemple et s'étend à d'autres variantes.

Ainsi, on comprendra que l'interconnexion entre la carte calculateur et la carte façade pourrait être obtenue par d'autres moyens, par exemple par une nappe souple de fils conducteurs.

En outre, bien que l'invention ait été décrite en référence particulière à un boîtier de commande pour une installation de chauffage et/ou de climatisation de véhicule automobile, elle peut être appliquée à d'autres équipements. Il peut s'agir notamment de panneaux pour afficheurs, d'écrans multifonction, d'horloges, de tableaux d'instrumentation, d'autoradios, etc.

## Revendications

1. Tableau de commande, en particulier pour véhicule automobile, comprenant un bâti (12) muni d'une façade (14), un circuit imprimé (22, 24) porté par le bâti et un dispositif d'affichage (18) relié au circuit imprimé et placé derrière une fenêtre (16) de la façade,
**caractérisé en ce que** le circuit imprimé comprend une première carte (22) dite "carte façade" (ou "carte clavier") placée derrière la façade (14) et munie d'une ouverture (30), ainsi qu'une deuxième carte (24) dite "carte calculateur" disposée de manière à former un angle donné par rapport à la carte façade et comportant un prolongement (38) propre à passer par l'ouverture (30) de la carte façade ; **en ce que** le prolongement (38) porte le dispositif d'affichage (18) ; et **en ce que** des moyens de maintien (34, 56) sont interposés entre la carte calculateur (24) et le bâti (12) pour maintenir le dispositif d'affichage (18) dans une position définie par rapport à la façade (14).

2. Tableau de commande selon la revendication 1, **caractérisé en ce que** la carte façade (22) et la carte calculateur (24) sont disposées perpendiculairement entre elles.

3. Tableau de commande selon l'une des revendications 1 et 2, **caractérisé en ce que** la carte façade (22) est sensiblement parallèle à une face arrière (20) de la façade (14), tandis que la carte calculateur (24) est sensiblement perpendiculaire à ladite face arrière (20) de la façade.

4. Tableau de commande selon l'une des revendications 1 à 3, **caractérisé en ce que** la carte façade (22) porte des contacte électriques (42, 44) propres à établir une liaison avec un clavier de commande porté par la façade et/ou avec des moyens d'éclairage de la façade.

5. Tableau de commande selon l'une des revendications 1 à 4, **caractérisé en ce que** la carte façade (22) est un circuit imprimé simple face portant deux nappes de connexion opposées.

6. Tableau de commande selon l'une des revendications 1 à 4, **caractérisé en ce que** la carte façade (22) est un circuit imprimé double face.

7. Tableau de commande selon l'une des revendications 1 à 6, **caractérisé en ce que** la carte calculateur (24) est un circuit imprimé double face.

8. Tableau de commande selon l'une des revendications 1 à 7, **caractérisé en ce qu'**il comprend des moyens d'interconnexion (46, 50) comprenant au moins un connecteur (46) à broches (48) et au moins une embase (50) à contacts (52) propres à établir un contact électrique mutuel.

9. Tableau de commande selon la revendication 8, **caractérisé en ce que** les moyens d'interconnexion comprennent au moins un connecteur à broches et au moins une embase à contacts propres à établir un contact électrique mutuel.

10. Tableau de commande selon la revendication 9, **caractérisé en ce que** les moyens d'interconnexion comprennent au moins un connecteur (46) porté par la carte façade (22) et au moins une embase (50) portée par la carte calculateur (24).

11. Tableau de commande selon la revendication 10, **caractérisé en ce que** les broches (48) et les connecteurs (46) s'étendent perpendiculairement à la carte façade (22).

12. , Tableau de commande selon la revendication 8, **caractérisé en ce que** les moyens d'interconnexion comprennent une nappe souple de conducteurs électriques.

13. Tableau de commande selon l'une des revendications 1 12, **caractérisé en ce que** les moyens de maintien comprennent au moine une vis (54) propre à traverser un trou oblong (56) ménagé au travers de la carte calculateur (24) et à s'engager dans un trou (58) du bâti (12).

14. Tableau de commande selon l'une des revendications 1 à 12, **caractérisé en ce que** les moyens de maintien comprennent des moyens faisant ressorts permanents.

15. Tableau de commande selon l'une des revendications 1 à 14, **caractérisé en ce qu'**il comprend des moyens élastiques (62) propres à solliciter la carte calculateur (24) en direction de la façade (14) et donc le dispositif d'affichage (18) vers sa position définie.

16. Tableau de commande selon la revendication 15, **caractérisé en ce que** les moyens élastiques comprennent au moins une patte souple (62) portée par le bâti (12) et propre à prendre appui contre un bord (34) de la carte calculateur (24).

17. Tableau de commande selon l'une des revendications 1 à 16, **caractérisé en ce que** la carte façade (22) est directement en appui contre la façade (14).

18. Tableau de commande selon l'une des revendications 1 à 16, **caractérisé en ce qu'**un bloc intermédiaire (76) est intercalé entre la façade (14) et la carte façade (22).

19. Tableau de commande selon l'une des revendications 1 à 18, **caractérisé en ce que** le dispositif d'affichage (18) est du type à cristaux liquides.

## Patentansprüche

1. Steuerpaneel, insbesondere für ein Kraftfahrzeug, umfassend ein mit einer Fassade (14) versehenes Gehäuse (12), eine gedruckte Schaltung (22, 24), die von dem Gehäuse gestützt wird, und eine Anzeigeeinrichtung (18), die mit der gedruckten Schaltung verbunden und hinter einem Fenster (16) der Fassade angeordnet ist, **dadurch gekennzeichnet, dass** die gedruckte Schaltung umfasst eine erste Karte (22), Fassadenkarte genannt (oder Tastaturkarte), angeordnet hinter der Fassade (14) und bereitgestellt mit einer Öffnung (30), sowie eine zweite Karte (24), Rechnerkarte genannt, angeordnet derart; dass ein gegebener Winkel gebildet wird mit Bezug auf die Fassadenkarte, und umfassend einen Fortsatz (38), geeignet, durch die Öffnung (30) der Fassadenkarte zu treten; und dass der Fortsatz (38) die Anzeigeeinrichtung (18) stützt; und dass Halterungsmittel (34, 56) zwischen der Rechnerkarte (24) und dem Gehäuse (12) zwischengelagert sind, um die Anzeigeeinrichtung (18) in einer definierten Position in Bezug auf die Fassade (14) zu halten.

2. Steuerpaneel nach Anspruch 1, **dadurch gekennzeichnet, dass** die Fassadenkarte (22) und die Rechnerkarte (24) senkrecht zueinander angeordnet sind.

3. Steuerpaneel nach einem der Ansprüche 1 und 2, **dadurch gekennzeichnet, dass** die Fassadenkarte (22) im wesentlichen parallel zu einer Heckfläche (20) der Fassade (14) verläuft, während die Rechnerkarte (24) im wesentlichen senkrecht zu der hinteren oder Heckfläche (20) der Fassade verläuft.

4. Steuerpaneel nach einem der Ansprüche 1 bis 3, **dadurch gekennzeichnet, dass** die Fassadenkarte (22) elektrische Kontakte (42, 44) trägt, geeignet zur Ausbildung einer Verbindung mit einer von der Fassade gestützten Steuertastatur und/oder mit Fassadenbeleuchtungsmitteln.

5. Steuerpaneel nach einem der Ansprüche 1 bis 4, **dadurch gekennzeichnet, dass** die Fassadenkarte (22) eine Einzelseiten-Gedruckte Schaltung ist, zwei gegenüberstehende Anschlussschichten aufweisend.

6. Steuerpaneel nach einem der Ansprüche 1 bis 4, **dadurch gekennzeichnet, dass** die Fassadenkarte (22) eine doppelseitige oder Zwei-Seiten-Gedruckte Schaltung bzw. -Schaltplatine ist.

7. Steuerpaneel nach einem der Ansprüche 1 bis 6, **dadurch gekennzeichnet, dass** die Rechnerkarte (24) eine Zwei- oder Doppelseiten-Gedruckte Schaltung ist.

8. Steuerpaneel nach einem der Ansprüche 1 bis 7, **dadurch gekennzeichnet, dass** es Anschlussmittel (46, 50) umfasst, umfassend zumindest einen Verbinder oder Stecker (46) mit Klemmen oder Broschen (48), sowie zumindest einen Sockel oder eine Fassung (50) mit Kontakten (52), geeignet zur Ausbildung eines wechselseitigen elektrischen Kontakts.

9. Steuerpaneel nach Anspruch 8, **dadurch gekennzeichnet, dass** die Anschlussmittel zumindest einen Steckverbinder und zumindest eine Kontaktfassung umfassen, geeignet zur Ausbildung eines wechselseitigen elektrischen Kontakts.

10. Steuerpaneel nach Anspruch 9, **dadurch gekennzeichnet, dass** die Anschlussmittel zumindest einen Verbinder oder Stecker (46), gestützt an der Fassadenkarte (22), und zumindest einen Sockel oder eine Fassung (50), gestützt von der Rechnerkarte (24), umfassen.

11. Steuerpaneel nach Anspruch 10, **dadurch gekennzeichnet, dass** die Klemmen oder Broschen (48) und die Stecker oder Verbinder (46) sich senkrecht zur Fassadenkarte (22) erstrecken.

12. Steuerpaneel nach Anspruch 8, **dadurch gekennzeichnet, dass** die Anschlussmittel eine weiche Schicht oder Lage an elektrischen Leitern umfassen.

13. Steuerpaneel nach einem der Ansprüche 1 bis 12, **dadurch gekennzeichnet, dass** die Halterungsmittel zumindest eine Schraube (54) umfassen, geeignet zum Durchqueren eines Langloches (56), ausgebildet durch die Rechnerkarte (24), und vorgesehen zum Eingriff in eine Öffnung (58) des Gehäuses (12).

14. Steuerpaneel nach einem der Ansprüche 1 bis 12, **dadurch gekennzeichnet, dass** die Halterungsmittel Mittel umfassen, die Permanentfedern ausbilden.

15. Steuerpaneel nach einem der Ansprüche 1 bis 14, **dadurch gekennzeichnet, dass** es elastische Mittel (62) umfasst, geeignet, die Rechnerkarte (24) in Richtung der Fassade (14), und somit die Anzeigeeinrichtung (18), hin zu der definierten Position zu beaufschlagen.

16. Steuerpaneel nach Anspruch 15, **dadurch gekennzeichnet, dass** die elastischen Mittel zumindest eine weiche Lasche (62) umfassen, gestützt von dem Gehäuse (12) und geeignet, in Anlage zu gelangen gegen einen Rand (34) der Rechnerkarte (24).

17. Steuerpaneel nach einem der Ansprüche 1 bis 16, **dadurch gekennzeichnet, dass** die Fassadenkarte (22) unmittelbar in Anlage gegen die Fassade (14) vorliegt.

18. Steuerpaneel nach einem der Ansprüche 1 bis 16, **dadurch gekennzeichnet, dass** ein zwischengelagerter Block (76) eingeklemmt ist zwischen der Fassade (14) und der Fassadenkarte (22).

19. Steuerpaneel nach einem der Ansprüche 1 bis 18, **dadurch gekennzeichnet, dass** die Anzeigeeinrichtung (18) vom Flüssigkristalltyp ist.

## Claims

1. Control panel, in particular for a motor vehicle, comprising a frame (12) provided with a front face (14), a printed circuit (22, 24) carried by the frame and a display device (18) connected to the printed circuit and placed behind a window (16) in the front face,
**characterised in that** the printed circuit comprises a first card (22) referred to as the "front-face card" (or "keypad card") placed behind the front face (14) and provided with an opening (30), and a second card (24) referred to as the "calculator card" disposed so as to form a given angle with respect to the front-face card and comprising an extension (38) able to pass through the opening (30) in the front-face card; **in that** the extension (38) carries the display device (18); and **in that** holding means (34, 56) are interposed between the calculator card (24) and the frame (12) in order to hold the display device (18) in a defined position with respect to the front face (14).

2. Control panel according to Claim 1, **characterised in that** the front-face card (22) and the calculator card (24) are disposed at right angles to each other.

3. Control panel according to one of Claims 1 and 2, **characterised in that** the front-face card (22) is substantially parallel to a rear face (20) of the front face (14), whilst the calculator card (24) is substantially at right angles to the said rear face (20) of the front face.

4. Control panel according to one of Claims 1 to 3, **characterised in that** the front-face card (22) carries electrical contacts (42, 44) able to establish a connection with a control keypad carried by the front face and/or with means of illuminating the front face.

5. Control panel according to one of Claims 1 to 4, **characterised in that** the front-face card (22) is a single-face printed circuit carrying two opposite connection layers.

6. Control panel according to one of Claims 1 to 4, **characterised in that** the front-face card (22) is a double-face printed circuit.

7. Control panel according to one of Claims 1 to 6, **characterised in that** the calculator card (24) is a double-face printed circuit.

8. Control panel according to one of Claims 1 to 7, **characterised in that** it comprises interconnection means (46, 50) comprising at least one connector (46) with pins (48) and at least one base (50) with contacts (52) able to establish mutual electrical contact.

9. Control panel according to Claim 8, **characterised in that** the interconnection means comprise at least one connector with pins and at least one base with contacts able to establish mutual electrical contact.

10. Control panel according to Claim 9, **characterised in that** the interconnection means comprise at least one connector (46) carried by the front-face card (22) and at least one base (50) carried by the calculator card (24).

11. Control panel according to Claim 10, **characterised in that** the pins (48) and the connectors (46) extend at right angles to the front-face card (22).

12. Control panel according to Claim 8, **characterised in that** the interconnection means comprise a flexible layer of electrical conductors.

13. Control panel according to one of Claims 1 to 12, **characterised in that** the holding means comprise at least one screw (54) able to pass through an oblong hole (56) provided through the calculator card (24) and to engage in a hole (58) in the frame (12).

14. Control panel according to one of Claims 1 to 12, **characterised in that** the holding means comprise means forming permanent springs.

15. Control panel according to one of Claims 1 to 14, **characterised in that** it comprises elastic means (62) able to force the calculator card (24) in the direction of the front face (14) and therefore the display device (18) towards its defined position.

16. Control panel according to Claim 15, **characterised in that** the elastic means comprise at least one flexible lug (62) carried by the frame (12) and able to bear against one edge (34) of the calculator card (24).

17. Control panel according to one of Claims 1 to 16, **characterised in that** the front-face card (22) is directly in abutment against the front face (14).

18. Control panel according to one of Claims 1 to 16, **characterised in that** an intermediate unit (76) is interposed between the front face (14) and the front-face card (22).

19. Control panel according to one of Claims 1 to 18, **characterised in that** the display device (18) is of the liquid crystal type.
